(19) Europäisches Patentamt
European Patent Office
Office européen des brevets

(11) **EP 3 558 018 B1**

(12) **EUROPEAN PATENT SPECIFICATION**

(45) Date of publication and mention of the grant of the patent:
**08.07.2020 Bulletin 2020/28**

(21) Application number: **17823063.7**

(22) Date of filing: **12.12.2017**

(51) Int Cl.:
*A23D 7/005* (2006.01)      *A23L 29/262* (2016.01)
*A23L 33/22* (2016.01)      *A23L 33/24* (2016.01)

(86) International application number:
**PCT/EP2017/082325**

(87) International publication number:
**WO 2018/114448 (28.06.2018 Gazette 2018/26)**

(54) **COMPOSITION COMPRISING A STRUCTURED CONTINUOUS OIL PHASE**

ZUSAMMENSETZUNG MIT EINER STRUKTURIERTEN KONTINUIERLICHEN ÖLPHASE

COMPOSITION COMPRENANT UNE PHASE HUILEUSE CONTINUE STRUCTURÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2016 EP 16206771**

(43) Date of publication of application:
**30.10.2019 Bulletin 2019/44**

(73) Proprietors:
• **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**
• **Unilever PLC**
**London, Greater London EC4Y 0DY (GB)**
Designated Contracting States:
**CY GB IE MT**

(72) Inventors:
• **BOUWENS, Elisabeth, Cornelia, Maria**
**3133 AT AT Vlaardingen (NL)**

• **VAN DER HIJDEN, Hendrikus, Theodorus, Wilhelmus, Maria**
**3133 AT AT Vlaardingen (NL)**
• **KOSTER, Marinus, Willem**
**3133 AT AT Vlaardingen (NL)**
• **VREEKER, Robert**
**3133 AT AT Vlaardingen (NL)**

(74) Representative: **van den Brom, Coenraad Richard**
**Unilever Patent Group**
**Bronland 14**
**6708 WH Wageningen (NL)**

(56) References cited:
WO-A1-2015/128155      US-A1- 2004 086 626
US-A1- 2011 281 015      US-A1- 2016 030 907

• **G. DONGOWSKI ET AL: "Binding of Water, Oil, and Bile Acids to Dietary Fibers of the Cellan Type", BIOTECHNOLOGY PROGRESS, vol. 15, no. 2, 5 April 1999 (1999-04-05), pages 250-258, XP055053455, ISSN: 8756-7938, DOI: 10.1021/bp990014c cited in the application**

**Description**

**FIELD OF THE INVENTION**

The present invention relates to a composition comprising of a structured continuous oil phase, more particularly a composition that comprises at least 30 wt.% of a structured continuous oil phase that contains particulate anhydrous non-defibrillated cell wall material from plant parenchymal tissue and less than 10 wt.% water.

The invention also relates to a process of preparing such a composition.

**BACKGROUND TO THE INVENTION**

Compositions comprising a structured continuous oil phase are well-known. There are edible products that consist essentially of a structured oil phase, such as, for instance, shortenings. There are also edible products that comprise a continuous oil phase in combination with a dispersed phase, e.g. a dispersed aqueous phase or a dispersed phase of solid or semi-solid particles. Examples of the latter group of edible products include margarine and peanut butter. The structured continuous oil phase of the aforementioned products largely determines the rheological and textural properties as well as the stability of these compositions.

Traditionally the oil phase of edible compositions is structured by a crystalline high melting fat matrix. However, it is desirable to reduce the amount of high melting (hard stock) fat in these compositions, e.g. because of limited natural availability of these high melting fats (such as palm oil) or because of adverse effects on consumer health (due to high levels of saturated fatty acids).

Cellulose is an organic compound with the formula $(C_6H_{10}O_5)_n$, a polysaccharide consisting of a linear chain of several hundred to many thousands of $\beta(1{\rightarrow}4)$ linked D-glucose units. Cellulose is an important structural component of the primary cell wall of green plants, many forms of algae and the oomycetes. Some species of bacteria secrete it to form biofilms. Plant-derived cellulose is usually found in a mixture with hemicellulose, lignin, pectin and other substances, while bacterial cellulose is quite pure.

Cellulose is a straight chain polymer: unlike starch, no coiling or branching occurs, and the molecule adopts an extended and rather stiff rod-like conformation, aided by the equatorial conformation of the glucose residues. The multiple hydroxyl groups on the glucose from one chain form hydrogen bonds with oxygen atoms on the same or on a neighbor chain, holding the chains firmly together side-by-side and forming microfibrils with high tensile strength. This confers tensile strength in cell walls, where cellulose microfibrils are meshed into a polysaccharide matrix.

Microfibrillated cellulose, also referred to a nanofibrillated cellulose, is the term used to describe a material that is composed of cellulose microfibrils (or cellulose nanofibrils) that can be isolated from disrupted and disentangled cellulose containing primary or secondary plant cell material or pellicles (in the case of bacterial cellulose). These cellulose microfibrils typically have a diameter of 3-70 nanometers and a length that can vary within a wide range, but usually measures several micrometers. Aqueous suspensions of microfibrillated cellulose are pseudo-plastic and exhibit a property that is also observed in certain gels or thick (viscous) fluids, i.e. they are thick (viscous) under normal conditions, but flow (become thin, less viscous) over time when shaken, agitated, or otherwise stressed. This property is known as thixotropy. Microfibrillated cellulose can be obtained and isolated from a cellulose containing source through high pressure, high temperature and high velocity impact homogenization, grinding or microfluidization.

EP-A 0 533 147 describes a margarine comprising microfibrillated cellulose.

WO 02/18486 describes a vegetable oil comprising a composition that contains:

(a) hydrophilic insoluble cellulose; and
(b) a co-agent capable of forming hydrogen bonds with said hydrophilic insoluble cellulose, wherein said co-agent is soluble in a water-immiscible liquid.

US 2011/0281014 and US 2011/0281015 disclose shortening compositions comprising an admixture of a cellulose fiber, a hard fat, and a liquid oil, wherein the shortening composition comprises less than about 1% water by weight based on total weight of the composition.

US 2016/0030907 discloses subjecting vegetable material such as sugar beet pulp to a chemical treatment (e.g. with NaOH) resulting in partial degradation and/or extraction of pectin, followed by treatment with a high pressure homogeniser. The so-obtained material can be used in the stabilisation of suspended solid particles and/or gas bubbles in aqueous fluids.

WO2015/128155 discloses the use of compressed dried cell clusters (plant parenchymal cell wall clusters) as a structurant in instant dry products, optionally after grinding the compressed clusters. The bulk density of such compressed clusters is at least 100 g/l. It may be used as a replacer of (modified) starch.

G. Dongowski et al, in "Binding of water, oil and bile acids to dietary fibres of the cellan type" (Biotechnology Progress, vol. 15 no. 2, April 1999, pages 250-258 disclose that dietary fibres of the "cellan type" (consisting mainly or exclusively of undestroyed cells) can bind or adsorp water, oil, detergent-stabilised oil/water emulsions and bile acids.

**SUMMARY OF THE INVENTION**

The inventors have discovered a new, very effective way of structuring the oil phase of oil-continuous compositions. In particular, it was found that particulate anhydrous non-defibrillated cell wall material from plant parenchymal tissue having a particle size of between 25 $\mu$m and 500 $\mu$m is capable of structuring liquid oil at very low concentrations, typically at concentrations of not more than 4 wt.%. This particulate cell wall material differs from microfibrillated cellulose in that it does not largely consist of cellulose microfibrils that have been isolated from disrupted and disentangled cellulose containing primary or secondary plant cell material. Instead the particulate anhydrous non-defibrillated cell wall material that is used in accordance with the present invention is largely composed of particles that contain cell wall fragments in which the cellulose microfibrils are still linked via hemicellulosic tethers into a cellulose-hemicellulose network that is embedded in a pectin matrix.

Thus, the present invention provides an oil-continuous composition comprising at least 30 wt.% of a structured continuous oil phase and less than 10 wt.% water, said structured continuous oil phase comprising:

- 96-99.7 wt.% fat, said fat having a solid fat content at 20°C ($N_{20}$) of 0-50% and a liquid oil content at 20°C that equals 100%-$N_{20}$;
- particulate anhydrous non-defibrillated cell wall material from plant parenchymal tissue, said particulate anhydrous non-defibrillated cell wall material having a particle size of between 25 $\mu$m and 500 $\mu$m;

wherein the particulate anhydrous non-defibrillated cell wall material is present in the structured continuous oil phase in a concentration of 0.3-4% by weight of the liquid oil.

The particulate cell wall material of the present invention has an extremely low bulk density, i.e. typically a bulk density of less than 50 g/l. In other words, the particles within the particulate cell wall material have a very high porosity. Although the inventors do not wish to be bound by theory, it is believed that liquid oil is capable of entering the particles within the particulate cell wall material. These oil-filled particles increase the viscosity of the oil phase and at higher concentration they can even render the oil-phase semi-solid. It is believed that the structuring capability of the particulate cell wall material is due to its capacity to build a space-filling (percolating) network. Thus, surprisingly, the particulate cell wall material, which is hydrophilic in nature, remains suspended within the hydrophobic oil phase.

The particulate cell wall material that is employed in accordance with the present invention may suitably be produced from plant parenchymal tissue by (i) comminuting said tissue, (ii) subjecting the tissue to a heat treatment before, during or after comminution, (iii) extensively washing the heat treated and comminuted material with water, and (iv) drying the washed material. The washing step results in the removal of water-soluble components such as pectin, sugars and water-soluble salts. As a result of the removal of pectin, the ratio of galacturonic acid to glucose in the polysaccharide component of the starting material (plant parenchymal tissue) is reduced substantially.

The functionality of the particle cell wall material may be further enhanced by subjecting the heat treated and comminuted material to conditions of high shear.

The particulate cell wall material of the present invention can suitably be used to full or partially replace hard stock fat in oil-continuous products such as shortenings, savoury concentrates, nut spreads, pesto's, tapenades, marinades and oil continuous seasonings.

Another aspect of the invention relates to a process of preparing an oil-continuous composition, said process comprising mixing 100 parts by weight of fat with 0.1-10 parts by weight of particulate anhydrous non-defibrillated cell wall material from plant parenchymal tissue; said fat having a solid fat content at 20°C ($N_{20}$) of 0-50%; said particulate anhydrous non-defibrillated cell wall material having a bulk density of less than 50 g/l and at least 90 wt.% of said particulate anhydrous non-defibrillated cell wall material having a particle size between 25 $\mu$m and 500 $\mu$m.

The invention further relates to the use of particulate anhydrous non-defibrillated cell wall material for structuring oil, said particulate anhydrous non-defibrillated cell wall material having a bulk density of less than 50 g/l and at least 90 wt.% of said particulate anhydrous non-defibrillated cell wall material having a particle size between 25 $\mu$m and 500 $\mu$m.

Finally, it is herein disclosed a method of preparing particulate anhydrous non-defibrillated cell wall material having a bulk density of less than less than 50 g/l, at least 90 wt.% of said particulate anhydrous non-defibrillated cell wall material having a particle size between 25 $\mu$m and 500 $\mu$m, said method comprising:

- providing plant material having a water content of at least 50 wt.% and comprising parenchymal tissue from plant material selected from cucumber, leek, sugar beet, apple, pear, pumpkin, kiwi, strawberry, papaya, pine apple, prune, melon, apricot, grapes onion, tomato, potato, coconut and combinations thereof, said parenchymal tissue providing at least 80 wt.% of the dry matter in the starting material;

- heating the plant material to a temperature 'T' exceeding $T_{min}$ of 70°C during a time period 't' wherein temperature T (in °C) and the time period t (in minutes) meet the following equation:

$$t > 1200/(T-69)^{1.4};$$

- washing the heated plant material or a fraction of the heated plant material with water to reduce the concentration of monosaccharides to less than 10% by weight of dry matter, said monosaccharides being selected from glucose, fructose and combinations thereof; and
- drying the washed plant material;

wherein the plant material is comminuted before the washing step to produce a pulp.

## DETAILED DESCRIPTION OF THE INVENTION

A first aspect of the present invention relates to an oil-continuous composition comprising at least 30 wt.% of a structured continuous oil phase and less than 10 wt.% water, said structured continuous oil phase comprising:

- 96-99.7 wt.% fat, said fat having a solid fat content at 20°C ($N_{20}$) of 0-50% and a liquid oil content at 20°C that equals 100%-$N_{20}$;
- particulate anhydrous non-defibrillated cell wall material from plant parenchymal tissue, said particulate anhydrous non-defibrillated cell wall material having a particle size of between 25 $\mu$m and 500 $\mu$m;

wherein the particulate anhydrous non-defibrillated cell wall material is present in the structured continuous oil phase in a concentration of 0.3-4% by weight of the liquid oil.

The term "fat" as used herein refers to glycerides selected from triglycerides, diglycerides, monoglycerides, phosphoglycerides, free fatty acids and combinations thereof.

The terms 'fat' and 'oil' are used interchangeably, unless specified otherwise. Where applicable the prefix 'liquid' or 'solid' is added to indicate if the fat or oil is liquid or solid at 20°C. "Hard stock" is an example of a solid fat. Hard stock typically has a solid fat content at 20°C ($N_{20}$) of at least 30%.

The term "structured continuous oil phase" as used herein refers to a continuous oil phase that contains a non-liquid component that introduces non-Newtonian behaviour into the oil phase.

The terminology "particulate anhydrous non-defibrillated cell wall material" as used herein refers to particulate cell wall material in which the cellulose microfibrils are linked via hemicellulosic tethers into a cellulose-hemicellulose network that is embedded in a pectin matrix particles, said particulate cell wall material having a water content of not more than 15 wt.%.

The term "liquid" as used herein refers to a state in which a material is a nearly incompressible fluid that conforms to the shape of its container. As such, it is one of the four fundamental states of matter (the others being solid, gas, and plasma), and is the only state with a definite volume but no fixed shape. The term "liquid" also encompasses viscous liquids.

The solid fat content of a fat at a temperature of t °C (Nt) can suitably be determined using ISO 8292-1 (2012) - Determination of solid fat content by pulsed NMR.

The particles size distribution of the particulate anhydrous non-defibrillated cell wall material can suitably be determined by means of sieving in oil, i.e. by employing a set of sieves of different mesh sizes and by dispersing the cell wall material into a sufficient quantity of oil before sieving. This same technique can be used to determine the particle size distribution of other non-fat particulate components of the oil-continuous composition.

The term "bulk density" as used herein, unless indicated otherwise, refers to freely settled bulk density.

The molar ratio of galacturonic acid to glucose as referred to herein is determined by first completely hydrolysing the polysaccharides (>10 monosaccharide units) and oligosaccharides (2-10 monosaccharide units) present, followed by quantification of the galacturonic acid and glucose content.

The galacturonic acid and glucose content can suitably be determined by means of the following procedure. Firstly, samples are pre-solubilized using 72% w/w sulfuric acid-$d_2$ at room temperature for 1h. Subsequently the samples are diluted with $D_2O$ to 14% w/w sulfuric acid-$d_2$ and hydrolyzed in an oven at 100 °C for 3h. The galacturonic acid and glucose content of the hydrolyzed samples are then determined using the NMR method described by de Souza et al. (A robust and universal NMR method for the compositional analysis of polysaccharides (2013) Carbohyd. Polym. 95, 657-663 and van Velzen et al.(Quantitative NMR assessment of polysaccharides in complex food matrices (2014) in Magnetic resonance in Food science - Defining food by magnetic resonance pp 39-48 F. Capozzi, L. Laghi and P.S. Belton (Eds.) Royal Society of Chemistry, Cambridge, UK).

Whenever reference is made herein to the water content of a composition or a material, unless indicated otherwise, this includes all the water that is present in said composition or material.

The word "comprising" as used herein is intended to mean "including" but not necessarily "consisting of" or "composed of." In other words, the listed steps or options need not be exhaustive.

Unless indicated otherwise, weight percentages (wt.%) are based on the total weight of a composition.

Unless specified otherwise, numerical ranges expressed in the format "from x to y" are understood to include x and y. When for a specific feature multiple preferred ranges are described in the format "from x to y", it is understood that all ranges combining the different endpoints are also contemplated. For the purpose of the invention ambient temperature is defined as a temperature of about 20 degrees Celsius.

The oil-continuous composition of the present invention preferably contains at least 50 wt.%, more preferably at least 80 wt.%, even more preferably at least 90 wt.% and most preferably at least 95 wt.% of the structured continuous oil phase

The oil-continuous composition preferably has a shear storage modulus G' at 20°C of at least 5,000 Pa, more preferably of at least 8,000 Pa and most preferably of at least 10,000 Pa.

In accordance with one embodiment of the invention the oil-continuous composition consists of the structured continuous oil phase.

In accordance with another embodiment of the invention the oil-continuous composition contains:

- 30-90 wt% of the structured continuous oil phase; and
- 10-70 wt.% of solid particles selected from salt particles, sugar particles, particles of intact plant tissue, particles of intact animal tissue and combinations thereof, said solid particles having a diameter in the range of 0.1-10 mm.

The oil-continuous composition of the present invention is preferably selected from shortenings, savoury concentrate,nut spreads, pesto's, tapenades, marinades and oil continuous seasonings.

The water content of the present composition preferably does not exceed 7 wt.%, more preferably it does not exceed 5 wt.% and most preferably it does not exceed 3 wt.%.

The water activity of the oil-continuous composition preferably does not exceed 0.7, more preferably it does not exceed 0.6 and most preferably it does not exceed 0.4.

Besides the structured continuous oil phase, the composition can contain one or more dispersed components. Examples of such dispersed components include particles that comprise one or more edible ingredients selected from sugar, salt, sodium glutamate, yeast extract, vegetables, herbs, spices, flour, thickening agents and gelling agents.

Besides fat and the particulate cell wall material, the structured continuous oil phase may include dissolved components (e.g. anti-oxidants, flavourings, colourants, vitamins) and/or dispersed components having a diameter of less than 5 $\mu$m. These components are regarded as part of the structured continuous oil phase. In other words, dispersed components having a diameter of larger than 5 $\mu$m other than the particulate plant material of the present invention, are not part of the structured continuous oil phase.

The fat in the structured continuous oil phase preferably comprises at least 80 wt.%, more preferably at least 90 wt.% and most preferably at least 95 wt.% of one or more natural fats selected from coconut oil, palm kernel oil, palm oil, marine oils (including fish oil), lard, tallow fat, butter fat, soybean oil, safflower oil, cotton seed oil, rapeseed oil, linseed oil, sesame oil, poppy seed oil, corn oil (maize oil), sunflower oil, peanut oil, rice bran oil, olive oil, algae oil, shea fat, alanblackia oil; fractions of these oils. These fats may also be employed in hydrogenated and/or interesterified form.

According to a preferred embodiment, the fat present in the structured continuous oil phase preferably contains at least 50 wt.% of liquid oil selected from soybean oil, sunflower oil, rape seed (canola) oil, cotton seed oil, peanut oil, rice bran oil, safflower oil, palm olein, linseed oil, fish oil, high omega-3 oil derived from algae, corn oil (maize oil), sesame oil, olive oil, and combinations thereof. More preferably the liquid oil is selected from soybean oil, sunflower oil, rape seed oil, corn oil (maize oil), olive oil, linseed oil, palm olein and combinations thereof

The fat that is contained in the structured continuous oil phase of the present composition preferably has a solid fat content at 20°C ($N_{20}$) of 0-30%, more preferably of 0-20% and most preferably of 0-15%.

The aforementioned fat preferably has a solid fat content at 35°C ($N_{35}$) of 0-10%, more preferably of 0-5% and most preferably of 0-3%.

The fat in the structured continuous oil phase preferably contains at least 50 wt.%, more preferably at least 80 wt.% and most preferably at least 90 wt.% triglycerides.

According to a particularly preferred embodiment, the composition of the present invention is not a liquid at 20°C, more preferably, the composition is solid or semi-solid at 20°C. Likewise, it is preferred that also the structured continuous oil phase *per se* is not a liquid at 20°C. More preferably, the structured continuous oil phase *per se* is solid or semi-solid at 20°C

If applied in a sufficiently high concentration, the particulate cell wall material of the present invention can render the composition non-flowing. Accordingly, in a preferred embodiment, the present composition is non-flowing in that a sample of the composition of 30 ml that has been prepared in a polypropylene jar with an internal diameter of 5.2 cm, after equilibration at 20°C for 1 hour, does not flow within 1 minute after the jar is turned upside down.

The particulate cell wall material of the present invention can be used to produce a fat-continuous composition that is non-liquid, and that does not become liquid even when the fat contained therein is liquid or when it is liquefied by heating.

Accordingly, in a first embodiment, the oil-continuous composition of the present invention is non-liquid at 20°C even though the fat contained therein is liquid at 20°C. In other words, in accordance with this embodiment, at 20°C the oil-continuous composition is non-liquid (e.g. solid or semi-solid) thanks to the structuring effect of the particulate cell wall material.

In a second embodiment, the oil-continuous composition is not liquid at the melting temperature of the fat that is contained therein, said melting temperature being defined as the lowest temperature T at which the solid fat content (Nt) of the fat equals 0. It is noted that various fats (e.g. sunflower oil and soybean oil) have melting points below ambient temperature.

The particulate cell wall material of the present invention can also be used to produce a fat-continuous composition that is non-liquid by employing said particulate cell wall material in combination with another oil structuring agent, especially high melting (hard stock) fat. Using a combination of particulate cell wall material and hardstock fat offers the advantage that the amount of hardstock can be reduced whilst at the same time maintaining desirable product properties that are associated with the melting behaviour of the hardstock.

Accordingly, in an alternative preferred embodiment, the fat-continuous composition is non-liquid at 20°C, and the fat contained herein has a solid fat content at 20°C ($N_{20}$) of at least 5%, more preferably of 8-50% and most preferably of 10-40%. The fat contained in the composition preferably has a solid fat content at 35°C ($N_{35}$) of less than 10%, more preferably of less than 5% and most preferably of less than 2%. The fat preferably exhibits a difference in solid fat content at 20°C and 35°C ($N_{20}$-$N_{35}$) of at least 5%, more preferably of at least 8%, most preferably of at least 10%.

Preferably, in the latter embodiment of the oil-continuous composition becomes liquid at temperatures at which it no longer contains solid fat. Thus, in another preferred embodiment, the oil-continuous composition is a liquid at the melting temperature of the fat that is contained therein, said melting temperature being defined as the lowest temperature T at which the solid fat content (Nt) of the fat equals 0.

In accordance with a particularly preferred embodiment, the structured continuous oil phase contains not more than 3.5 wt.%, more preferably not more than 3.0 wt.%, more preferably not more than 2.5 wt.% and most preferably not more than 2.0 wt.% of the particulate anhydrous non-defibrillated cell wall material. The concentration of said particulate cell wall material in the structured continuous oil phase preferably is at least 0.1 wt.%, more preferably at least 0.2 wt.% and most preferably at least 0.3 wt.%.

Calculated by weight of the liquid oil that is present in the fat of the structured continuous oil phase, said oil phase preferably contains not more than 3.5 wt.%, more preferably not more than 3.0 wt.%, even more preferably not more than 2.5 wt.% and most preferably not more than 2.0 wt.% of the particulate anhydrous non-defibrillated cell wall material. Again, calculated by weight of the liquid oil that is present in the fat of the structured continuous oil phase, the concentration of the particulate cell wall material in the structured continuous oil phase preferably is at least 0.35 wt.%, more preferably at least 0.40 wt.% and most preferably at least 0.45 wt.%.

The oil-continuous composition of the present invention preferably contains, calculated by weight of the liquid oil, at least 0.3 wt.%, more preferably at least 0.4 wt.% and most preferably at least 0.45 wt.% of particulate anhydrous non-defibrillated cell wall material having a particle size between 40 $\mu$m and 300 $\mu$m.

The particulate anhydrous non-defibrillated cell wall material of the present invention contains not more than 15 wt.% water. Preferably the water content of said particulate cell wall material is less than 12 wt.%, more preferably less than 9 wt.% and most preferably less than 7 wt.%.

The particulate cell wall material of the present invention may comprise both primary cell wall material and secondary cell wall material. Preferably, at least 85 wt.%, more preferably at least 90 wt.% and most preferably at least 95 wt.% of said particulate cell wall material is primary cell wall material.

Primary plant cell walls contain not more than a minor amount of lignin, if at all. The particulate anhydrous cell wall material preferably contains less than 10 wt.%, more preferably less than 3 wt.% and most preferably less than 1 wt.% lignin.

The particulate anhydrous non-defibrillated cell wall material employed in accordance with the present invention preferably originates from fruit, bulb, root, tuber, leave, and/or stem tissue. More preferably, the particulate anhydrous non-defibrillated cell wall material originates from one or more plant sources selected from cucumber, sugar beet, apple, leek, pear, pumpkin, kiwi, strawberry, papaya, pine apple, prune, melon, apricot, grapes onion, tomato, potato, coconut. Even more preferably, said particulate cell wall material originates from cucumber, sugar beet, apple, pear, potato, leek and/or onion.

As explained earlier, the particulate cell wall material that is employed in accordance with the present invention may suitably be produced from plant parenchymal tissue by (i) comminuting said tissue, (ii) subjecting the tissue to a heat treatment before, during or after comminution, (iii) extensively washing the heat treated and comminuted material with water, and (iv) drying the washed material. Due to the removal of pectin during the washing step, the ratio of galacturonic acid to glucose in the polysaccharide component of the starting material (plant parenchymal tissue) is reduced substantially. Accordingly, in a preferred embodiment, the anhydrous non-defibrillated cell wall material contains galacturonic acid and glucose in a molar ratio of less than 0.52, preferably of less than 0.50.

In an embodiment of the invention, the particulate anhydrous non-defibrillated cell wall material originates from cucumber and contains:

- galacturonic acid and glucose in a molar ratio of less than 0.45, preferably of less than 0.40, most preferably of less than 0.35;
- 0-1 wt.% , more preferably 0-0.5 wt.%, most preferably 0-0.1 wt.% of small saccharides selected from monosaccharides, disaccharides, trisaccharides and combinations thereof;
- 0-15 wt.% water.

This cell wall material from cucumber preferably has a structuring value of at least 0.0030, more preferably of at least 0.0040 and most preferably of at least 0.0050.

The "structuring value" is determined by means of confocal scanning laser microscopy (CSLM) using the procedure that is specified in the Examples.

In an embodiment of the invention, the particulate anhydrous non-defibrillated cell wall material originates from apple and contains:

- galacturonic acid and glucose in a molar ratio of less than 0.48, preferably less than 0.45, most preferably of less than 0.42;
- 0-1 wt.% , more preferably 0-0.5 wt.%, most preferably 0-0.1 wt.% of small saccharides selected from monosaccharides, disaccharides, trisaccharides and combinations thereof;
- 0-15 wt.% water.

This cell wall material from apple preferably has a structuring value of at least 0.0015, more preferably of at least 0.0020 and most preferably of at least 0.0040.

In an embodiment of the invention, the particulate anhydrous non-defibrillated cell wall material originates from leek and contains:

- galacturonic acid and glucose in a molar ratio of less than 0.45, preferably of less than 0.40, most preferably of less than 0.35;
- 0-1 wt.% , more preferably 0-0.5 wt.%, most preferably 0-0.1 wt.% of small saccharides selected from monosaccharides, disaccharides, trisaccharides and combinations thereof;
- 0-15 wt.% water.

This cell wall material from leek preferably has a structuring value of at least 0.0040, more preferably of at least 0.0050 and most preferably of at least 0.0055.

In an embodiment of the invention, the particulate anhydrous non-defibrillated cell wall material originates from onion and contains:

- galacturonic acid and glucose in a molar ratio of less than 0.48, preferably of less than 0.45;
- 0-1 wt.% , more preferably 0-0.5 wt.%, most preferably 0-0.1 wt.% of small saccharides selected from monosaccharides, disaccharides, trisaccharides and combinations thereof;
- 0-15 wt.% water.

This cell wall material from onion preferably has a structuring value of at least 0.0018, more preferably of at least 0.0030 and most preferably of at least 0.0040.

In an embodiment of the invention, the particulate anhydrous non-defibrillated cell wall material originates from pear and contains:

- galacturonic acid and glucose in a molar ratio of less than 0.48, preferably of less than 0.46;
- 0-1 wt.% , more preferably 0-0.5 wt.%, most preferably 0-0.1 wt.% of small saccharides selected from monosaccharides, disaccharides, trisaccharides and combinations thereof;
- 0-15 wt.% water.

This cell wall material from pear preferably has a structuring value of at least 0.0014, more preferably of at least 0.0020 and most preferably of at least 0.0040.

In an embodiment of the invention, the particulate anhydrous non-defibrillated cell wall material originates from sugar beet and contains:

- galacturonic acid and glucose in a molar ratio of less than 0.40, preferably of less than 0.35, most preferably of less than 0.30;
- 0-1 wt.% , more preferably 0-0.5 wt.%, most preferably 0-0.1 wt.% of small saccharides selected from monosaccharides, disaccharides, trisaccharides and combinations thereof;
- 0-15 wt.% water.

This cell wall material from sugar beet preferably has a structuring value of at least 0.0025, more preferably of at least 0.0035 and most preferably of at least 0.0050.

In an embodiment of the invention, the particulate anhydrous non-defibrillated cell wall material originates from potato and contains:

- 0-25 wt.%, preferably 0-10 wt.% and more preferably 0-5 wt.% starch;
- 0-1 wt.% , more preferably 0-0.5 wt.%, most preferably 0-0.1 wt.% of small saccharides selected from monosaccharides, disaccharides, trisaccharides and combinations thereof;
- 0-15 wt.% water.

This cell wall material from potato preferably has a structuring value of at least 0.0030, more preferably of at least 0.0035 and most preferably of at least 0.0050.

According to a particularly preferred embodiment, the oil-continuous composition is obtainable by, more preferably obtained by a process of preparing an oil-continuous composition as described herein.

Likewise, it is preferred that the particulate cell wall material that is contained in the oil-continuous composition is obtainable by, more preferably obtained by a method of preparing particulate anhydrous non-defibrillated cell wall material as described herein.

Another aspect of the present invention relates to a process of preparing an oil-continuous composition, said process comprising mixing 100 parts by weight of fat with 0.1-10 parts by weight of particulate anhydrous non-defibrillated cell wall material from plant parenchymal tissue; said fat having a solid fat content at 20°C ($N_{20}$) of 0-50%; said particulate anhydrous non-defibrillated cell wall material having a bulk density of less than 50 g/l, preferably of less than 30 g/l, more preferably of less than 25 g/l, even more preferably of less than 20 g/l and most preferably of less than 18 g/l; and at least 90 wt.% of said particulate anhydrous non-defibrillated cell wall material having a particle size between 25 $\mu$m and 500 $\mu$m.

The present process preferably employs particulate anhydrous non-defibrillated cell wall material as defined herein before. Likewise, also the fat employed preferably is a fat as defined herein before.

The mixing of fat with the particulate cell wall material may be achieved in different ways. In one embodiment, the particulate cell wall material is in the form of a powder when it is mixed with the fat. In accordance with a particularly preferred embodiment, the fat is fully liquid or liquefied when it is mixed the powder.

In an alternative embodiment, the mixing is achieved by combining the fat with a dispersion of the particulate cell wall material in a low boiling polar organic solvent (boiling point <90°C), followed by removal of the polar organic solvent, i.e. separation from the fat and the particular cell wall material. Examples of low boiling polar organic solvents that may be employed in accordance with this embodiment include ethanol, iso-propanol and mixtures thereof. After the dispersion of the particulate cell wall material has been combined with the fat, the polar organic solvent may be removed by means of filtration and/or evaporation. This particular embodiment offers the advantage that the energy demanding drying of wet particulate cell wall material can be avoided. The water in the wet particulate cell wall material that is produced after one or more washings with water can simply be replaced by the aforementioned polar organic solvent (solvent exchange). Due to the low boiling point of the polar organic solvent, this solvent can easily be removed from the mixture of fat and particulate cell wall material.

Preferably, the present process comprises mixing 100 parts by weight of fat with 0.2-5 parts by weight, more preferably 0.3-3 parts by weight and most preferably 0.4-2 parts by weight of the particulate cell wall material.

In accordance with another preferred embodiment, the process comprises combining 100 parts by weight of fat with at least 0.1 parts by weight, more preferably at least 0.2 parts by weight, most preferably at least 0.3 parts by weight of particulate anhydrous non-defibrillated cell wall material having a bulk density of less than 50 g/l and at least 90 wt.% of said particulate anhydrous non-defibrillated cell wall material having a particle size between 40 $\mu$m and 300 $\mu$m.

The particulate cell wall material employed in the present process preferably originates from cucumber, sugar beet, apple, pear, potato, leek and/or onion. These materials typically have a very low bulk density. Depending on the origin of the particulate cell wall material, the preferred bulk densities are as follows:

| Cucumber: | less than 12 g/l, more preferably less than 8 g/l |
|---|---|
| Apple: | less than 15 g/l, more preferably less than 10 g/l |
| Leek: | less than 20 g/l, more preferably less than 12 g/l |
| Onion: | less than 20 g/l, more preferably less than 15 g/l |
| Pear: | less than 20 g/l, more preferably less than 12 g/l |
| Sugar beet: | less than 20 g/l, more preferably less than 12 g/l |
| Potato: | less than 12 g/l, more preferably less than 10 g/l |

The particulate cell wall material employed in the present process typically contains not more than a limited amount of water soluble salt. Accordingly, when dispersed in demineralised water in a concentration of 3 wt.% the particulate cell wall material produces a suspension having a conductivity of less than 250 $\mu$S/cm, preferably of less than 100 $\mu$S/cm.

According to another preferred embodiment, the particulate cell wall material employed in the present invention produces a structured oil phase having a shear storage modulus G' at 20°C of at least 5,000 Pa, more preferably of at least 8,000 Pa and most preferably of at least 10,000 Pa when said material is dispersed through sunflower oil in a concentration of 1 wt.%.

According to a particularly preferred embodiment, the present process yields an oil-continuous composition as defined herein before.

It is further preferred that the particulate cell wall material that is employed in the present process is obtainable by, more preferably obtained by a method of preparing particulate anhydrous non-defibrillated cell wall material as described herein.

A further aspect of the present invention relates to the use of the particulate anhydrous non-defibrillated cell wall material as defined herein for structuring oil.

It is further disclosed a method of preparing particulate anhydrous non-defibrillated cell wall material having a bulk density of less than less than 50 g/l, at least 90 wt.% of said particulate anhydrous non-defibrillated cell wall material having a particle size between 25 $\mu$m and 500 $\mu$m, said method comprising:

- providing plant material having a water content of at least 50 wt.% and comprising parenchymal tissue from plant material selected from cucumber, sugar beet, leek, apple, pear, pumpkin, kiwi, strawberry, papaya, pine apple, prune, melon, apricot, grapes onion, tomato, potato, coconut and combinations thereof, said parenchymal tissue providing at least 80 wt.% of the dry matter in the starting material;
- heating the plant material to a temperature 'T' exceeding $T_{min}$ of 70°C during a time period 't' wherein temperature T (in °C) and the time period t (in minutes) meet the following equation:

$$t > 1200/(T-69)^{1.4};$$

- washing the heated plant material or a fraction of the heated plant material with water to reduce the concentration of monosaccharides to less than 10% by weight of dry matter, said monosaccharides being selected from glucose, fructose and combinations thereof; and
- drying the washed plant material;

wherein the plant material is comminuted before the washing step to produce a pulp.

It is noted that plant material having a water content of at least 50 wt.% may be provided in the form of reconstituted dry plant material.

Preferably, the present method of preparing a particulate cell wall material produces a particulate anhydrous non-defibrillated cell wall material as defined herein before. The plant material employed in the present method is preferably selected from cucumber, sugar beet, apple, pear, potato, tomato, onion and combinations thereof. According to a particularly preferred embodiment of the present process $T_{min}$ is 75°C. Even more preferably $T_{min}$ is 80°C, especially 90°C and most preferably 100°C.

Typically, the temperature 'T' employed in the present process does not exceed 150°C, more preferably it does not exceed 120°C and most preferably it does not exceed 102°C.

The heating period 't' preferably exceeds 1 minute, more preferably it exceeds 2 minutes. Most preferably, the heating period t is in the range of 3-120 minutes.

The plant material that is heated in the present process typically contains 10-40% water-insoluble material by weight of dry matter. More preferably, this plant material contains 15-40% and most preferably 20-40% water-insoluble material by weight of dry matter.

The plant material that is heated in the present process typically contains 3-75% monosaccharides by weight of dry matter, said monosaccharides being selected from glucose, fructose and combinations thereof. In case the plant material contains fruit, monosaccharides are typically contained therein in a concentration of 25-85%, most preferably of 30-80% by weight of dry matter.

Due to the washing step of the present method the concentration of the aforementioned monosaccharides in the plant material is typically reduced to less than 10% by weight of dry matter, more preferably less than 5% by weight of dry matter and most preferably to less than 3% by weight of dry matter.

The washing step of the present process advantageously employs in total at least 50 litres of water per kg of dry matter that is contained in the material that is subjected to the washing step. More preferably, at least 100 litres, even more preferably at least 200 litres, especially at least 400 litres and most preferably at least 800 litres of water are employed in the washing per kg of dry matter contained in the material that is subjected to the washing step.

The washed plant material is preferably dried to a water content of less than 15 wt.%, more preferably a water content of less than 10 wt.%, and most preferably of less than 7 wt.%.

Drying techniques that may suitably be employed to dry the washed plant material include freeze drying, drum drying, solvent exchange, extrusion drying. Most preferably, the washed plant material is dried by means of freeze drying.

According to another particularly preferred embodiment, before the washing step, the heated plant material is subjected to shear by using industrial shear devices like Silverson, Turrax or Thermomix, high pressure homogenisation and Microfluidiser. Suitable operating conditions are specified below:

- HPH: 100-2000 bar
- Microfluidiser: 500-2,000 bar.
- Silverson: 4,000-8,000 rpm
- Ultra Turrax: tipspeed of 10-23 m/s
- Thermomix (speed 2-10)

The homogenization of the heated plant material prior to the washing step ensures that most of the cell walls are ruptured and that water-soluble components can more easily be removed during the washing step.

The invention is further illustrated by means of the following non-limiting examples.

## EXAMPLES

### Example 1

Freeze dried powders were produced from comminuted cucumber.

### Sample 1.A

Cucumber was peeled and cut in small pieces and frozen in liquid nitrogen prior to freeze drying.

### Sample 1.B

100g peeled, cut, fresh cucumber was heated in a microwave until boiling, no water added, covered to prevent evaporation, then blended in Waring blender for 30 sec speed 10, then again heated until boiling. The sample was frozen in liquid nitrogen prior to freeze drying.

### Sample 1.1

To 550g peeled and cut, fresh cucumber just boiled demineralized water was added to have a 1 kg suspension. The suspension was heated (H) in the microwave (5min, 1000W, till boiling) and blended in a Thermomix for 30min at 90°C (blending speed 4). Demineralized water (~5L) was used for washing (W) of the cwm with a Buchner funnels and a Miracloth filter (pore size 25 $\mu$m). After the washing step, the residue contained 275g. The sample was frozen in liquid nitrogen prior to freeze drying.

### Sample 1.2

Fresh cucumbers were peeled and cut into small pieces. 896 g of the chopped cucumber was added to 1.6 kg hot Millipore water (ca. 90°C), heated in a microwave (7 min, 1000 W) until boiling and pureed in a Thermomix (speed dial position 3, duration: 30 minutes, temperature: 90 °C). Water soluble compounds were removed from the cucumber puree by washing with demineralized water (6 L) using a filter cloth (Miracloth, pore size 25 micrometer).

The washed puree was dispersed in 1.35 kg demineralized water and sheared twice using a high-shear Silverson mixer. The first shear treatment (5 min, 5000 rpm) was performed using a high shear screen with large square holes (ca. 2.8 x 2.8 mm); in the second shear treatment (10 min, 7000 rpm) an emulsor screen with small spherical holes (ca. 2.0 mm diameter mm) was used. The sample was washed (5L) using a filter cloth (Miracloth, pore size 25 micrometer) to remove small compounds. Part (200 g) of the sample was frozen in liquid nitrogen prior to freeze drying.

### Sample 1.3

Part (600g) of sample 1.2 which had not been frozen was transferred to a highpressure homogenizer (GEA Niro Soavi, Panda Plus) and homogenized at a pressure of 500-600 bar. The sample was extra washed (2L) using a filter cloth (Miracloth, pore size 25 micrometer). The sample was frozen in liquid nitrogen prior to freeze drying.

### Sample 1.4

This sample was prepared using the same procedure as used for sample 1.3, except that the HPH treatment was carried out at 1500 bar and then the homogenized puree was poured onto a pre-cooled metal plate and frozen at -80 °C. The frozen sample was freeze dried and milled in a Waring blender.

### Assessment of oil structuring capacity and G'

The oil structuring capacity and G' of the freeze dried cucumber powders was determined at concentrations of 1.0 wt.%.and 0.75 wt.%, respectively.

The oil structuring capacity was assessed by dispersing the powder into sunflower oil at different concentrations. The following procedure was followed:

- An amount of slightly less than 30 g of sunflower oil is introduced into a glass beaker having an internal diameter of 5.2 cm
- a predetermined quantity of powder is thoroughly dispersed through the oil by means of a spatula to produce in total 30 grams of a dispersion
- the mixture is kept at 20°C for 60 minutes
- the beaker is turned upside down to see if the sample flows (observation time: 1 minute)

G' of the sample was determined by small-deformation oscillatory measurements [see e.g. H.A. Barnes, J.F. Hutton and K. Walters, An introduction to Rheology, Amsterdam, Elsevier, 1989)]. Oscillatory measurements were performed using an AR2000 or AR G2 rheometer (TA Instruments) equipped with plate-plate geometry. Plates were sandblasted to avoid wall slip effects. Diameter of the upper plate was 4 cm, gap size was 1 mm. Optionally, a sandblasted sample cup (57 mm inner diameter, depth 2100 $\mu$m) was mounted on the lower plate of the rheometer. In this case sample loading was as follows: the sample cup was slightly overfilled and excess sample was removed by dragging the edge of a spatula across the top of the cup. The upper plate was then lowered to a distance of 2050 $\mu$m from the bottom of the sample cup. Oscillatory measurements were performed at 1 Hz frequency and 0.5% strain (within the linear viscoelastic region) at a temperature of 20 °C. Measurements started 2 minutes after the sample had reached the desired temperature. G' was recorded during a period of 5 minutes (time-sweep measurement); the value of G' measured at t = 5 min is reported.

### Assessment of oil structuring value

Oil structuring values were assessed by confocal microscopy and image analysis.

Samples for confocal microscopy were prepared by adding 25 mg of a water-soluble fluorophore (Direct Yellow 96 ex Sigma Aldrich) to an aqueous cucumber suspension containing 1 gram dry matter. The suspension was mixed well to assure complete dissolution of the Direct Yellow. Samples were then quickly frozen in liquid nitrogen and freeze dried. After freeze drying particles were dispersed in sunflower oil at 1% dry matter. Confocal microscopy was performed using a Leica TCS SP5 confocal system in combination with a DMI6000 inverted microscope. The fluorescent dye was excited using the 458 nm laser line of an Argon ion laser at 25% of its maximum power and the AOTF set at 23%. Fluorescence was detected with PMT2 set at a wavelength range of 470-570 nm. The pinhole was set to 1 airy. Scanning was done at 400Hz and 8 bit (values 0 to 255) data collection. The objective used was 40x HCX PL APO CS 40.0 NA 1.25 OIL UV, refraction index 1.52, no zoom was applied.

Contrast during imaging was controlled by the detector gain and offset controls. The detector gain control was adjusted such that minimal over-exposure occurs. No offset adjustment was required.

To enlarge the total acquired volume, tile scanning 2x2 was combined with the acquisition of a Z-stack. Four tiles of 1024x1024 pixels (greyscale) with a pixel size (in XY-direction) of 0.38 $\mu$m were acquired as a 2x2 matrix for each Z-plane position. The tiles were stitched together using an overlap of 10% yielding 1 slice. Z-axis acquisition steps were setup to be also 0.38 $\mu$m to obtain an isotropic voxel size. For the stacks a maximum of about 250-300 slices can be acquired, depending on the exact starting position, and the thickness of the droplet on the glass slide. At least 225 usable slices were acquired for each sample.

Stacks of greyscale images were pre-processed using Matlab R2016a in addition with DipLib library V2.8 (a Scientific Image Analysis Library from the Quantitative Imaging Group, Delft University of Technology 1995-2015). Noise was removed using a median filter. A size of 7 pixels (2D) and an elliptic shape was chosen which effectively removed noise and tiny speckles while retaining detail. To achieve consistency in the dynamic range for a set of data and enhance the contrast, a histogram stretch function was applied. This works by defining two brightness levels, a minimum and a maximum percentile. Contrast was maximized between those levels. This was done by moving all pixels darker than the minimum percentile to a brightness of 0, and all pixels brighter than the maximum percentile to a brightness of 255. Values in between the minimum and maximum were proportionately distributed in the range of 0 to 255. The minimum was set to the 50th percentile, and the maximum to the 99th percentile. The stretch was consistently applied to all images (slice by slice) in the stack. Next, each slice was binarised using an automatic ISO data method (black, or 0 is background, and white or 255 are features of interest). This method was determined by trying out four different automatic thresholding methods; Otsu, entropy, factorisation and iso-data. Except for the entropy method, the algorithms yielded stable values close to 80. The result was stored as a set of images in TIFF format.

Skeletonization of a stack of CSLM images, acquired using the method described above, allowed derivation of a distinctive parameter (total segment length [$\mu$m]/volume [$\mu$m$^3$]), which was used as a measure for coarseness of the structure of the dispersed plant material. A stack of binary TIFF images was imported into Avizo Fire software (from FEI/VSG, V9.0.1). The procedure "Auto-skeleton" was applied, which performs a series of operations on 3D shapes. A skeleton of a shape is a thin version of that shape that is equidistant to its boundaries (background). The Avizo module extracts the centerline of filamentous structures from the stack of image data by first calculating a distance map of the segmented volume. This map labels each pixel of the image with the distance to the nearest background pixel. Next, thinning was performed by removing voxel by voxel from the segmented object until only a string of connected voxels remains. This thinning was ordered according to the distance map input. The voxel skeleton was then converted to a spatial graph object. Two parameters influence the construction of the traced graph object. The "smooth" value is a coefficient that controls the influence of neighboring points on the position of a point. This parameter can take values greater than 0 and smaller than 1. The greater the value the smoother the result Spatial Graph becomes. A default value of 0.5 was used, together with an iteration value of 10. Another parameter named "attach to data" controls the influence of the initial coordinate on the new position. The higher the value the more the initial position will be retained. The default value of 0.25 was used. The distance to the nearest boundary (boundary distance map) was stored at every point in the spatial graph object as thickness attribute. This value was used as an estimate of the local thickness.

Visualizations of the skeleton were created which show these variations in local thickness; the segments of the graphs were drawn as tubes whose diameter (and color) depends on the thickness defined by the distance map (the distance to the nearest boundary was stored at every point in the Spatial Graph object as a thickness attribute). From the resulting graphs, the number of segments and the total length of these segments were calculated with the spatial graph statistics module. Next the total length was normalized for the imaged volume, and this value (total segment length [$\mu$m]/volume [$\mu$m$^3$]) was reported as oil structuring value.

The results of the different assessments are shown in Table 1

**Table 1**

| Sample | Density (g/l) | Moisture (wt.%) | 1 wt.% Flow | 1 wt.% G' (Pa) | 0.75 wt.% Flow | 0.75 wt.% G' (Pa) | Structur. value ($\mu$m/$\mu$m$^3$) |
|---|---|---|---|---|---|---|---|
| **1.A** | 250 | n.d. | Yes | n.d. | Yes | n.d. | n.d. |
| **1.B** | 14 | 8 | Yes | n.d. | Yes | n.d. | 0.0006 |
| **1.1** | 6 | 8 | No | n.d. | n.d. | n.d. | 0.0061 |
| **1.2** | 7 | 2 | No | 23,100 | n.d. | n.d. | 0.0061 |
| **1.3** | 5 | 9 | No | 75,400 | No | n.d. | 0.0128 |

(continued)

| Sample | Density (g/l) | Moisture (wt.%) | 1 wt.% | | 0.75 wt.% | | Structur. value ($\mu m/\mu m^3$) |
|---|---|---|---|---|---|---|---|
| | | | Flow | G' (Pa) | Flow | G' (Pa) | |
| **1.4** | 3 | 10 | No | 17,665 | No | 8,900 | n.d. |

**Example 2**

Freeze dried powders were produced from comminuted apple.

*Sample 2.A*

Fresh apple was peeled and cut in small pieces and frozen in liquid nitrogen prior to freeze drying.

*Sample 2.B*

To 50g peeled, cut, apple 20g just boiled demineralised water was added and the combination was heated in a microwave for 3 min 1000W, (1 min boiling) then blended in a Waring blender for 30 sec speed 10, yield was 60 g sample which was stored at 4 °C.

*Sample 2.1*

Fresh apples were peeled and cut into small pieces. 160 gram freshly cut apple particles were added to 340 gram just boiled, demineralized water and heated in a microwave oven. The sample was then treated in a Thermomix and washed with 1.2 L demineralized water using Miracloth filter. The residue was collected from the filter cloth and dispersed in demineralized water (600 g total mass). Part of the suspension was added dropwise to liquid nitrogen, quickly frozen and freeze dried.

*Sample 2.2*

The part of sample 2.1 that had not been frozen and freeze dried, was sheared using a Silverson mixer and was washed again using Miracloth filter with 1 liter demineralized water. The residue was collected and redispersed in demineralized water (500 gram total mass). 140 g of the suspension was added dropwise to liquid nitrogen, quickly frozen and freeze dried.

*Sample 2.3*

360g of the suspension produced in the preparation of sample 2.2 and that was not frozen and freeze dried, was homogenized at 500 bar using a high pressure homogenizer. The sample was washed (1L) on Miracloth filter using demineralized water; the residue was collected and redispersed in demineralized water (185 g total mass). The suspension was added dropwise to liquid nitrogen, quickly frozen and freeze dried.

*Assessment of oil structuring capacity and G'*

The oil structuring capacity and G' of the freeze dried powders was determined at concentrations of 2.0 wt.%.and 1.0 wt.%, respectively, using the procedure described in Example 1. The results of the assessments are shown in Table 2.

**Table 2**

| Sample | Density (g/l) | Moisture (wt.%) | 2 wt.% Flow | 1 wt.% | | Structur. Value ($\mu m/\mu m^3$) |
|---|---|---|---|---|---|---|
| | | | | Flow | G' (Pa) | |
| **2.A** | 280-300 | 5-10 | Yes | n.d. | n.d. | n.d. |
| **2.B** | 18 | 2 | Yes | n.d. | n.d. | 0.0007 |
| **2.1** | 9 | 1 | No | Yes | n.d. | 0.0018 |
| **2.2** | 9 | 0.1 | No | No | 15,000 | 0.0062 |

(continued)

| Sample | Density (g/l) | Moisture (wt.%) | 2 wt.% Flow | 1 wt.% Flow | G' (Pa) | Structur. Value ($\mu$m/$\mu$m$^3$) |
|---|---|---|---|---|---|---|
| 2.3 | 8 | 0.3 | No | No | 65,500 | 0.0211 |

### Example 3

Freeze dried powders were produced from comminuted leek (white part)

*Sample 3.A*

To 30g, cut, fresh white leek just boiled demineralised water was added to have a total of 100g, the combination was heated in a microwave until boiling (2 min 150W boiling temperature) and then blended in a Waring blender for 30 sec speed 10. The sample was frozen in liquid nitrogen and freeze dried.

*Sample 3.1*

To 280 g leek (white parts only) that had been cut in small pieces, 520 g demineralized boiled water was added, followed by cooking (same as sample 3A), shearing (using Thermomix for 90 min at 90°C at speed 3-4), and washing with 3L demineralized water using Miracloth filter. The residue was collected, frozen in liquid nitrogen and freeze dried.

*Sample 3.2*

To 280g leek (white parts only) that had been cut in small pieces,520 g demineralised boiled water was added, followed by and cooking (same as sample 3A), shearing (using Thermomix for 90 min at 90°C at speed 3-4), and washing with 3L demineralized water using Miracloth filter. The residue was collected and sheared using a Silverson mixer and was washed again using Miracloth filter with 1 liter demineralized water. The residue was collected and redispersed in demineralized water. Half of the dispersion was frozen in liquid nitrogen and freeze dried.

*Sample 3.3*

Half of the sample of 3.2 which had not been frozen was homogenized at 500 bar using a high pressure homogenizer. The sample was washed on Miracloth filter using demineralized water (1L). The residue was dropwise quickly frozen in liquid nitrogen and freeze dried.

*Assessment of oil structuring capacity and G'*

The oil structuring capacity and G' of the freeze dried leek powder was determined at concentrations of 1.0 wt.% and 2.0 wt.%, respectively, using the procedure described in Example 1. The results of this assessment are shown in Table 3.

Table 3

| Sample | Density (g/l) | 2 wt.% Flow | 1 wt.% Flow | G' (Pa) | Structur. value ($\mu$m/$\mu$m$^3$) |
|---|---|---|---|---|---|
| 3.A | 30 | Yes | Yes | n.d. | 0.0026 |
| 3.1 | 11-14 | No | Yes | n.d. | 0.0026 |
| 3.2 | 7 | No | No | 16,000 | 0.0058 |
| 3.3 | 7 | No | No | 96,000 | 0.0123 |

### Example 4

Freeze dried powders were produced from comminuted onion.

*Sample 4.A*

To 1 kg fresh cut onion just boiled demineralized water was added to have a 1.7 kg suspension. The suspension was heated (H) in the microwave till boiling temperature was reached (7min, 1000W) and blended in a Thermomix for 30 min at 100°C (blending speed 4 for 25 min then blended at speed 5 for 5 min). 150g puree was taken and frozen in liquid nitrogen and freeze dried.

*Sample 4.1*

To 1 kg fresh cut onion just boiled demineralized water was added to have a 1.7 kg suspension. The suspension was heated (H) in the microwave till boiling temperature was reached (7min, 1000W) and blended in a Thermomix for 30 min at 100°C (blending speed 4 for 25 min then blended at speed 5 for 5 min). The batch was washed using demineralized water (~6L) and a Buchner funnel and Miracloth filter (pore size 25 $\mu$m). After the washing step, 400g sample was taken and frozen in liquid nitrogen and freeze dried.

*Sample 4.2*

This sample (450g) was prepared in the same way as sample 4.1 but not frozen. The puree was treated by Silverson for 5 min 5000 rpm using square screen workhead and then 10 min 7000 rpm using emulsor screen workhead. The batch was washed (3L) again using Miracloth and the residue was taken up in 965g. 450g was used and frozen in liquid nitrogen and freeze dried.

*Sample 4.3*

This sample (500g) was prepared in the same way as sample 4.2, but not frozen. 500g of the puree was treated further by HPH (GEA Niro Soavi, Panda Plus), then washed (1L) using Miracloth, and frozen in liquid nitrogen and then freeze dried.

*Assessment of oil structuring capacity and G'*

The oil structuring capacity and G' of the freeze dried powders was determined at concentrations of 2.0 wt.% and 1.0 wt.%, respectively, using the procedure described in Example 1. The results of the assessments are shown in Table 4.

**Table 4**

| Sample | Density (g/l) | 2 wt.% Flow | 1 wt.% Flow | G' (Pa) | Structur. value ($\mu$m/$\mu$m$^3$) |
|--------|---------------|-------------|-------------|---------|--------------------------------------|
| **4.A** | 44 | Yes | Yes | 404 | 0.0016 |
| **4.1** | 16 | No | Yes | n.d | 0.0018 |
| **4.2** | 14 | No | Yes | 4,560 | 0.0022 |
| **4.3** | 7 | No | No | 40,240 | 0.0061 |

## Example 5

Freeze dried powders were produced from comminuted pear.

*Sample 5.A*

To 1kg peeled and cut, fresh pear just boiled demineralized water was added to have a 1.7 kg suspension. The suspension was heated in the microwave till boiling temperature was reached (7min, 1000W) and blended in a Thermomix for 30 min at 90°C (blending speed 4) 110g puree was taken and frozen in liquid nitrogen and freeze dried.

*Sample 5.1*

The rest (1.59 kg) of the puree produced in the preparation of sample 5.A was washed using demineralized water (~6L) and a Buchner funnel and Miracloth filter (pore size 25 $\mu$m). After the washing step, 200g sample was frozen in liquid nitrogen and freeze dried.

*Sample 5.2*

To the part (856g) of sample 5.1 that had not been frozen demineralised water was added to obtain 1kg. This batch was treated by Silverson for 5 min 5000 rpm using square screen workhead and then 10 min 7000 rpm using emulsor screen workhead. The batch was washed again (3L) using Miracloth and the residue was taken up in 806 g. 200 g was taken and frozen in liquid nitrogen and freeze dried.

*Sample 5.3*

Another part of 600 g of sample 5.2 which had not been frozen was treated further by HPH (GEA Niro Soavi, Panda Plus), at 500-600 bar, then washed using Miracloth (1L), and residue was taken up in 330g and frozen in liquid nitrogen and freeze dried.

*Assessment of oil structuring capacity and G'*

The oil structuring capacity and G' of the freeze dried powders was determined at concentrations of 2.0 wt.% and 1.0 wt.%, respectively, using the procedure described in Example 1. The results of the assessments are shown in Table 5.

**Table 5**

| Sample | Density (g/l) | 2 wt.% Flow | 1 wt.% Flow | G' (Pa) | Structur. value ($\mu$m/$\mu$m$^3$) |
|---|---|---|---|---|---|
| **5.A** | 81 | Yes | Yes | 2 | 0.0009 |
| **5.1** | 18 | No | Yes | 305 | 0.0017 |
| **5.2** | 11 | No | Yes | 648 | 0.0020 |
| **5.3** | 9 | No | No | 6,935 | 0.0063 |

**Example 6**

Freeze dried powders were produced from comminuted sugar beet.

*Sample 6.A*

Fresh sugar beet were kindly harvested and supplied by a local farmer, Schrauwen Zevenbergen. 2x 800g fresh washed and cut sugar beet was added to just boiled demineralized water to have a 2x 1.7 kg suspension. The suspension was divided in 2 batches and heated in the microwave till boiling temperature was reached (7min, 1000W) and blended in a Thermomix for 60 min at 90°C (blending speed 4 - 5, last 5 min speed 6). 100g sample was taken as Sample 6.A and was frozen in liquid nitrogen and freeze dried. The rest of the batches was used to prepare the samples 6.1, 6.2 and 6.3, as described below.

*Sample 6.1*

100 grams of the blended suspension of sugar beet produced in the preparation of sample 6.A was washed using 2L demineralized water and a Buchner funnel using Miracloth. After the filtrate was clear, washing was stopped and 100g sample of residue was taken and was frozen in liquid nitrogen and freeze dried.

*Sample 6.2*

1000 grams of the blended suspension of sugar beet produced in the preparation of sample 6.1 was combined with demineralised water to have 1.5 kg and this batch was treated by Silverson for 5 min 5000 rpm using square screen workhead and then 10 min 7000 rpm using emulsor screen workhead. The batch was washed again (3L) using Miracloth and the residue was taken up in 1400g of which 760g was frozen in liquid nitrogen and freeze dried.

*Sample 6.3*

600g of Sample 6.2 was treated further by HPH, at 500-800 bar, then washed (2L) using Miracloth, and the residue of 600g was frozen in liquid nitrogen and freeze dried.

*Visual comparison of freeze dried powders*

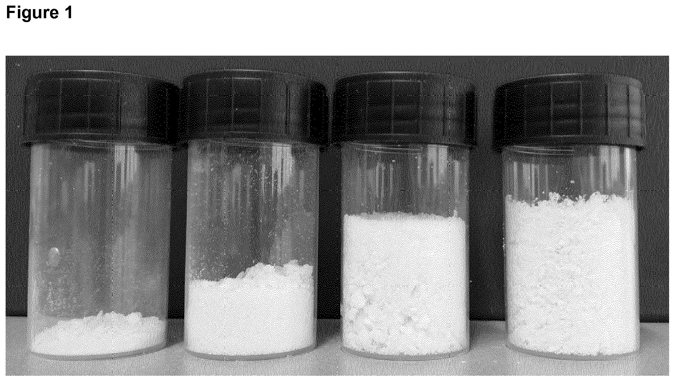

Equal quantities (weight) of the freeze dried powders 6.A, 6.1, 6.2 and 6.3 were introduced into transparent jars. A picture of the jars containing the powders is shown in Figure 1. From left to right this picture shows 0.3g of powder 6.A, powder 6.1, powder 6.2 and powder 6.3.

*Assessment of oil structuring capacity and G'*

The oil structuring capacity and G' of the freeze dried powders was determined at concentrations of 2.0 wt.% and 1.0 wt.%, respectively, using the procedure described in Example 1. The results of the assessments are shown in Table 6.

**Table 6**

| Sample | Density (g/l) | 2 wt.% Flow | 1 wt.% Flow | G' (Pa) | Structur. value ($\mu m/\mu m^3$) |
|--------|---------------|-------------|-------------|---------|-----------------------------------|
| **6.A** | 88 | Yes | Yes | 0.1 | 0.0019 |
| **6.1** | 13 | No | Yes | 804 | 0.0019 |
| **6.2** | 10 | No | Yes | 13,572 | 0.0038 |
| **6.3** | 9 | No | No | 59,805 | 0.0077 |

**Example 7**

Freeze dried powders were produced from comminuted potato.

*Sample 7.A*

To 50 g of fresh, not peeled small cut potato, just boiled demineralized water was added to have a 0.15 kg suspension which was heated in the microwave till boiling temperature was reached (5 min boiling, between 160-1000W) and blended in Waring blender for 30 seconds, speed 10, then again heated until boiling. The sample was stored at 4°C and when cooled down, frozen in liquid nitrogen prior to freeze drying.

*Sample 7.1*

To 1.4 kg not peeled cut potato, just boiled demineralized water was added to have a 3.5 kg suspension. The suspension was divided in 2 batches and heated in the microwave till boiling temperature was reached (7min, 1000W) and blended in a Thermomix for 30 min at 90°C (blending speed 4). Both batches were washed using demineralized water (~6L) and a Buchner funnel and SAATI print filter (pore size 55 $\mu$m). After the washing step, an $\alpha$-amylase treatment was carried out to remove the starch for 24h at 60°C. Subsequently, the batches were washed again using demineralized water (~6L) on SAATI print filter (pore size 55 $\mu$m). After the washing step, 1/4 of the batch was treated again by Thermomix for 30 min 100°C (blending speed 10) and again by $\alpha$-amylase 2% and incubated 24h at 60°C was washed (3L) (again using SAATI print filter (pore size 55 $\mu$m). Then the sample was free of starch and was frozen in liquid nitrogen and freeze dried.

*Sample 7.2*

The rest of the batch (3/4 of the batch, prepared as described for sample 7.1, after the first washing step) was treated by Silverson for 5 min 5000 rpm using square screen workhead and then 10 min 7000 rpm using emulsor screen workhead. Then the batch was treated by $\alpha$-amylase from hog pancreas for 24 h at 60°C washed (6L) again using SAATI print filter (pore size 55 $\mu$m) and demineralized water. Then the sample was free of starch and one part was frozen in liquid nitrogen and freeze dried.

*Sample 7.3*

The other part of sample 7.2 (Silverson treated batch) was treated by HPH, 500-800 bar, then washed using 3L demineralized water and a 38 $\mu$m filter (Endecots). The residue was frozen in liquid nitrogen and freeze dried.

*Assessment of oil structuring capacity and G'*

The oil structuring capacity and G' of the freeze dried powders was determined at concentrations of 2.0 wt.% and 1.0 wt.%, respectively, using the procedure described in Example 1. The results of the assessments are shown in Table 7.

**Table 7**

| Sample | Density (g/l) | 2 wt.% Flow | 1 wt.% Flow | G' (Pa) | Structur. value ($\mu$m/$\mu$m$^3$) |
|--------|-------|------|------|--------|---------|
| **7.A** | 37 | Yes | Yes | 10 | 0.0015 |
| **7.1** | 9 | No | Yes | 3,199 | 0.0043 |
| **7.2** | 7 | No | No | 8,248 | 0.0041 |
| **7.3** | 8 | No | No | 16,676 | 0.0045 |

## Example 8

The oil structuring capacity of the dried cucumber powder of Example 1 was tested by comparing the impact of the powder with that of an ordinary hard stock.
Hard stock (erES48, produced by Unimills B.V., the Netherlands) and sunflower (SF) oil were mixed at a 1:9 ratio and heated in a microwave oven to about 80 °C. The dried cucumber powder was manually dispersed into the hot oil + hard stock mixture.
80 gram of the hot mixture was transferred to a double-walled, stirred vessel connected to a low-temperature cryostat bath (bath temperature is 5 °C). The stirring device consisted of a stirring blade with a helical shape and a scraping vane; the vane scraped along the surface of the vessel to remove crystalline fat. The mixture was stirred at 100 rpm for 5 minutes; after 5 minutes the temperature of the (oil+hard stock+powder) mixture had decreased to about 12 °C. The mixture was taken out and transferred to a plastic container. The plastic container was stored in a fridge at 5 °C.
The texture of the mixture so produced was compared with that of a 9:1 mixture SF oil and hard stock and a 8:2 mixture of SF oil and hard stock.
Texture analysis was performed using a Brookfield Texture Analyzer CT3 equipped with a cylindrical probe (probe diameter = 0.25 inch/6.35 mm; probe speed = 2 mm/s; maximum deformation = 25 mm; trigger value = 3 gram). The following parameters were recorded: peak load (maximum load measured during the test), final load (load at maximum deformation) and work (area under the force-deformation curve). The samples (80 gram) were contained in round plastic jars (diameter = 52 mm, volume ca. 100 ml). Measurements were performed after storing the samples for 21 days at 5 °C; measurement temperature was 5 °C.

**Table 8**

| Powder | Hard stock | SF oil | PL(g) | FL(g) | Work (mJ) |
|--------|-----------|--------|-------|-------|-----------|
| 0 wt% | 20 wt% | 80 wt% | 86 ± 19 | 85 ± 19 | 14.3 ± 2.3 |
| 0 wt% | 10 wt% | 90 wt% | 7 ± 1 | 6 ± 1 | 1.1 ± 0.1 |
| 1 wt% | 9.9 wt% | 89.1 wt% | 79 ± 9 | 78 ± 10 | 14.4 ± 0.4 |

## Example 9

For each of the above mentioned powders the molar ratio of galacturonic acid to glucose was determined after full hydrolysis of the polysaccharide and oligosaccharide component. In Table 9 the results of these analyses are listed together with the bulk densities and oil structuring values of these powders.

**Table 9**

| Plant origin | Sample | Molar ratio galacturonic acid : glucose # | Bulk density (g/l) | G' at 1% in oil (Pa) | Struct. value ($\mu m/\mu m^3$) |
|---|---|---|---|---|---|
| **Cucumber** | 1.A | n.d. | 250 | n.d. | n.d. |
| | 1.B | 0.59 # | 14 | n.d. | 0.0006 |
| | 1.1 | n.d. | 6 | n.d. | 0.0061 |
| | 1.2 | n.d. | 7 | 23,100 | 0.0061 |
| | 1.3 | n.d. | 5 | 75,400 | 0.0128 |
| | 1.4 | 0.30 | 3 | 17,665 | n.d. |
| **Apple** | 2.A | n.d | 280-300 | n.d. | n.d. |
| | 2.B | 0.63 # | 18 | n.d. | 0.0007 |
| | 2.1 | n.d. | 9 | n.d. | 0.0018 |
| | 2.2 | 0.39 | 9 | 15,000 | 0.0062 |
| | 2.3 | 0.32 | 8 | 65,500 | 0.0211 |
| **Leek** | 3.A | 0.56 # | 30 | n.d. | 0.0026 |
| | 3.1 | n.d. | 11-14 | n.d. | 0.0026 |
| | 3.2 | 0.32 | 7 | 16,000 | 0.0058 |
| | 3.3 | 0.24 | 7 | 96,000 | 0.0123 |
| **Onion** | 4.A | n.d. | 44 | 404 | 0.0016 |
| | 4.1 | n.d. | 16 | n.d. | 0.0018 |
| | 4.2 | 0.46 | 14 | 4,560 | 0.0022 |
| | 4.3 | 0.40 | 7 | 40,240 | 0.0061 |
| **Pear** | 5.A | n.d. | 81 | 2 | 0.0009 |
| | 5.1 | n.d. | 18 | 305 | 0.0017 |
| | 5.2 | 0.42 | 11 | 648 | 0.0020 |
| | 5.3 | 0.38 | 9 | 6,935 | 0.0063 |
| **Sugar beet** | 6.A | n.d. | 88 | 0.1 | 0.0019 |
| | 6.1 | n.d. | 13 | 804 | 0.0019 |
| | 6.2 | 0.24 | 10 | 13,572 | 0.0038 |
| | 6.3 | 0.18 | 9 | 59,805 | 0.0077 |
| **Potato** | 7.A | n.d. | 37 | 10 | 0.0015 |
| | 7.1 | n.d. | 9 | 319 | 0.0043 |
| | 7.2 | n.d. | 7 | 8,248 | 0.0041 |
| | 7.3 | n.d. | 8 | 16,676 | 0.0045 |

# Soluble solids (e.g. glucose) were removed by alcohol extraction prior to the analysis (procedure as described by in J Agric Food Chem. (2006) 54, 8471-9).

**Claims**

1. An oil-continuous composition comprising at least 30 wt.% of a structured continuous oil phase and less than 10 wt.% water, said structured continuous oil phase comprising:

- 96-99.7 wt.% fat, said fat having a solid fat content at 20°C ($N_{20}$) of 0-50% and a liquid oil content at 20°C that equals 100%-$N_{20}$;
- particulate anhydrous non-defibrillated cell wall material from plant parenchymal tissue, said particulate anhydrous non-defibrillated cell wall material having a particle size of between 25 $\mu$m and 500 $\mu$m; wherein the particulate anhydrous non-defibrillated cell wall material is present in the structured continuous oil phase in a concentration of 0.3-4% by weight of the liquid oil.

2. Composition according to claim 1, wherein the composition is not a liquid at 20°C.

3. Composition according to claim 1 or 2, wherein the composition is not liquid at the melting temperature of the fat that is contained therein, said melting temperature being defined as the lowest temperature T at which the solid fat content (Nt) of the fat equals 0.

4. Composition according to claim 2, wherein the fat-continuous composition is non-liquid at 20°C, and the fat contained herein has a solid fat content at 20°C of at least 5%.

5. Composition according to any one of the preceding claims, wherein the composition has a shear storage modulus G' at 20°C of at least 5,000 Pa.

6. Composition according to any one of the preceding claims, wherein the composition consists of the structured continuous oil phase.

7. Composition according to any one of the preceding claims, wherein the composition contains:

- 30-90 wt% of the structured continuous oil phase; and
- 10-70 wt.% of solid particles selected from salt particles, sugar particles, particles of intact plant tissue, particles of intact animal tissue and combinations thereof, said solid particles having a diameter in the range of 0.1-10 mm.

8. Composition according to any one of the preceding claims, wherein the anhydrous non-defibrillated cell wall material contains galacturonic acid and glucose in a molar ratio of less than 0.50, preferably of less than 0.48.

9. Composition according to any one of the preceding claims, wherein the particulate anhydrous non-defibrillated cell wall material originates from one or more plant sources selected from cucumber, sugar beet, apple, pear, leek, pumpkin, kiwi, strawberry, papaya, pine apple, prune, melon, apricot, grapes onion, tomato, potato, coconut.

10. A process of preparing an oil-continuous composition, said process comprising mixing 100 parts by weight of fat with 0.1-10 parts by weight of particulate anhydrous non-defibrillated cell wall material from plant parenchymal tissue; said fat having a solid fat content at 20°C ($N_{20}$) of 0-50%; said particulate anhydrous non-defibrillated cell wall material having a bulk density of less than 50 g/l and at least 90 wt.% of said particulate anhydrous non-defibrillated cell wall material having a particle size between 25 $\mu$m and 500 $\mu$m.

11. Process according to claim 10, wherein the particulate anhydrous non-defibrillated cell wall material when dispersed in demineralised water in a concentration of 3 wt.% produces a suspension having a conductivity of less than 200 $\mu$S/cm.

12. Process according to claim 10 or 11, wherein the process comprises mixing 100 parts by weight of fat with 0.4-4 parts by weight of the particulate anhydrous non-defibrillated cell wall material.

13. Process according to any one of claims 10-12, wherein the process yields an oil-continuous composition according to any one of claims 1-9.

14. Use of particulate anhydrous non-defibrillated cell wall material from parenchymal tissue for structuring oil, said particulate anhydrous non-defibrillated cell wall material having a bulk density of less than 50 g/l and at least 90 wt.% of said particulate anhydrous non-defibrillated cell wall material having a particle size between 25 $\mu$m and 500 $\mu$m.

**Patentansprüche**

1. Öl-kontinuierliche Zusammensetzung, umfassend mindestens 30 Gew.-% einer strukturierten kontinuierlichen Ölphase und weniger als 10 Gew.-% Wasser, wobei die strukturierte kontinuierliche Ölphase umfasst:

   • 96-99,7 Gew.-% Fett, wobei das Fett einen Gehalt an festem Fett bei 20°C ($N_{20}$) von 0-50% und einen Gehalt an flüssigem Öl bei 20°C, der 100%-$N_{20}$ gleichkommt, aufweist;
   • teilchenförmiges, wasserfreies nicht-defibrilliertes Zellwandmaterial von pflanzlichem Parenchymgewebe, wobei das teilchenförmige, wasserfreie nicht-defibrillierte Zellwandmaterial eine Teilchengröße zwischen 25 $\mu$m und 500 $\mu$m aufweist;

   wobei das teilchenförmige, wasserfreie nicht-defibrillierte Zellwandmaterial in der strukturierten kontinuierlichen Ölphase in einer Konzentration von 0,3-4 Gewichts-% des flüssigen Öls vorliegt.

2. Zusammensetzung nach Anspruch 1, wobei die Zusammensetzung bei 20°C keine Flüssigkeit ist.

3. Zusammensetzung nach Anspruch 1 oder 2, wobei die Zusammensetzung bei der Schmelztemperatur des Fetts, das darin enthalten ist, nicht flüssig ist, wobei die Schmelztemperatur als die niedrigste Temperatur T definiert wird, bei der der Gehalt des Fetts an festem Fett ($N_t$) 0 gleichkommt.

4. Zusammensetzung nach Anspruch 2, wobei die Fett-kontinuierliche Zusammensetzung bei 20°C nicht flüssig ist und das Fett, das hierin enthalten ist, einen Gehalt an festem Fett bei 20°C von mindestens 5% aufweist.

5. Zusammensetzung nach irgendeinem der vorhergehenden Ansprüche, wobei die Zusammensetzung ein Scherspeichermodul G' bei 20°C von mindestens 5.000 Pa aufweist.

6. Zusammensetzung nach irgendeinem der vorhergehenden Ansprüche, wobei die Zusammensetzung aus der strukturierten kontinuierlichen Ölphase besteht.

7. Zusammensetzung nach irgendeinem der vorhergehenden Ansprüche, wobei die Zusammensetzung enthält:

   • 30-90 Gew.-% der strukturierten kontinuierlichen Ölphase; und
   • 10-70 Gew.-% feste Teilchen, ausgewählt unter Salzteilchen, Zuckerteilchen, Teilchen von intaktem pflanzlichen Gewebe, Teilchen von intaktem tierischen Gewebe und Kombinationen davon, wobei die festen Teilchen einen Durchmesser in dem Bereich von 0,1-10 mm aufweisen.

8. Zusammensetzung nach irgendeinem der vorhergehenden Ansprüche, wobei das wasserfreie nicht-defibrillierte Zellwandmaterial Galacturonsäure und Glukose in einem molaren Verhältnis von weniger als 0,50, vorzugsweise von weniger als 0,48, enthält.

9. Zusammensetzung nach irgendeinem der vorhergehenden Ansprüche, wobei das teilchenförmige, wasserfreie nicht-defibrillierte Zellwandmaterial von einer oder mehreren pflanzlicher Quellen stammt, ausgewählt unter Gurke, Zuckerrübe, Apfel, Birne, Lauch, Kürbis, Kiwi, Erdbeere, Papaya, Ananas, Pflaume, Melone, Aprikose, Traubenzwiebel, Tomate, Kartoffel und Kokosnuss.

10. Verfahren zur Herstellung einer Öl-kontinuierlichen Zusammensetzung, wobei das Verfahren das Mischen von 100 Gewichtsteilen Fett mit 0,1-10 Gewichtsteilen teilchenförmigen, wasserfreien nicht-defibrillierten Zellwandmaterials von pflanzlichem Parenchymgewebe umfasst; wobei das Fett einen Gehalt an festem Fett bei 20°C ($N_{20}$) von 0-50% aufweist, das teilchenförmige, wasserfreie nicht-defibrillierte Zellwandmaterial eine Schüttdichte von weniger als 50 g/l aufweist und mindestens 90 Gew.-% des teilchenförmigen, wasserfreien nicht-defibrillierten Zellwandmaterials eine Teilchengröße zwischen 25 $\mu$m und 500 $\mu$m aufweisen.

11. Verfahren nach Anspruch 10, wobei das teilchenförmige, wasserfreie nicht-defibrillierte Zellwandmaterial, wenn es in entmineralisiertem Wasser in einer Konzentration von 3 Gew.-% dispergiert wird, eine Suspension liefert, die eine Leitfähigkeit von weniger als 200 $\mu$S/cm aufweist.

12. Verfahren nach Anspruch 10 oder 11, wobei das Verfahren das Mischen von 100 Gewichtsteilen Fett mit 0,4-4 Gewichtsteilen des teilchenförmigen, wasserfreien nicht-defibrillierten Zellwandmaterials umfasst.

**13.** Verfahren nach irgendeinem der Ansprüche 10-12, wobei das Verfahren eine Öl-kontinuierliche Zusammensetzung nach irgendeinem der Ansprüche 1-9 ergibt.

**14.** Verwendung des teilchenförmigen, wasserfreien nicht-defibrillierten Zellwandmaterials von Parenchymgewebe zum Strukturieren von Öl, wobei das teilchenförmige, wasserfreie nicht-defibrillierte Zellwandmaterial eine Schüttdichte von weniger als 50 g/l aufweist und mindestens 90 Gew.-% des teilchenförmigen, wasserfreien nicht-defibrillierten Zellwandmaterials eine Teilchengröße zwischen 25 $\mu$m und 500 mm aufweisen.

## Revendications

**1.** Composition continue d'huile comprenant au moins 30 % en masse d'une phase d'huile continue structurée et moins de 10 % en masse d'eau, ladite phase d'huile continue structurée comprenant :

> • 96-99,7 % en masse de graisse, ladite graisse présentant une teneur en graisse solide à 20°C ($N_{20}$) de 0-50 % et une teneur en huile liquide à 20°C qui est égale à 100 %-$N_{20}$ ;
> • un matériau de paroi de cellule non-défibrillé anhydre particulaire provenant de tissu parenchymateux de plante, ledit matériau de paroi de cellule non-défibrillé anhydre particulaire ayant une taille de particule de 25 $\mu$m à 500 $\mu$m ;

> dans laquelle le matériau de paroi de cellule non-défibrillé anhydre particulaire est présent dans la phase d'huile continue structurée dans une concentration de 0,3-4 % en masse de l'huile liquide.

**2.** Composition selon la revendication 1, dans laquelle la composition n'est pas un liquide à 20°C.

**3.** Composition selon la revendication 1 ou 2, dans laquelle la composition n'est pas liquide à la température de fusion de la graisse qui est contenue dans celle-ci, ladite température de fusion étant définie comme la température T la plus faible à laquelle la teneur en graisse solide ($N_t$) de la graisse est égale à 0.

**4.** Composition selon la revendication 2, dans laquelle la composition continue de graisse est non-liquide à 20°C, et la graisse contenue dans celle-ci présente une teneur en graisse solide à 20°C d'au moins 5 %.

**5.** Composition selon l'une quelconque des revendications précédentes, dans laquelle la composition présente un module au stockage de cisaillement G' à 20°C d'au moins 5 000 Pa.

**6.** Composition selon l'une quelconque des revendications précédentes, dans laquelle la composition consiste en la phase d'huile continue structurée.

**7.** Composition selon l'une quelconque des revendications précédentes, dans laquelle la composition contient :

> • 30-90 % en masse de la phase d'huile continue structurée ; et
> • 10-70 % en masse de particules solides choisies parmi des particules de sel, des particules de sucre, des particules de tissu de plante intacte, des particules de tissu d'animal intact et des combinaisons de celles-ci, lesdites particules solides ayant un diamètre dans l'intervalle de 0,1-10 mm.

**8.** Composition selon l'une quelconque des revendications précédentes, dans laquelle le matériau de paroi de cellule non-défibrillé anhydre contient de l'acide galacturonique et du glucose dans un rapport molaire inférieur à 0,50, de préférence inférieur à 0,48.

**9.** Composition selon l'une quelconque des revendications précédentes, dans laquelle le matériau de paroi de cellule non-défibrillé anhydre particulaire provient d'une ou plusieurs sources de plantes choisies parmi le concombre, la betterave à sucre, la pomme, la poire, le poireau, le potiron, le kiwi, la fraise, la papaye, l'ananas, la prune, le melon, l'abricot, les raisins, l'oignon, la tomate, la pomme de terre, la noix de coco.

**10.** Procédé de préparation d'une composition continue d'huile, ledit procédé comprenant le mélange de 100 parties en masse de graisse avec 0,1-10 parties en masse de matériau de paroi de cellule non-défibrillé anhydre particulaire provenant de tissu parenchymateux de plante ; ladite graisse ayant une teneur en graisse solide à 20°C ($N_{20}$) de 0-50 % ; ledit matériau de paroi de cellule non-défibrillé anhydre particulaire ayant une masse volumique apparente inférieure à 50 g/l et au moins 90 % en masse dudit matériau de paroi de cellule non-défibrillé anhydre particulaire ayant une taille de particule de 25 $\mu$m à 500 $\mu$m.

11. Procédé selon la revendication 10, dans lequel le matériau de paroi de cellule non-défibrillé anhydre particulaire lorsqu'il est dispersé dans de l'eau déminéralisée dans une concentration de 3 % en masse produit une suspension présentant une conductivité inférieure à 200 $\mu$S/cm.

12. Procédé selon la revendication 10 ou 11, dans lequel le procédé comprend le mélange de 100 parties en masse de graisse avec 0,4-4 parties en masse du matériau de paroi de cellule non-défibrillé anhydre particulaire.

13. Procédé selon l'une quelconque des revendications 10-12, dans lequel le procédé produit une composition continue d'huile selon l'une quelconque des revendications 1-9.

14. Utilisation de matériau de paroi de cellule non-défibrillé anhydre particulaire à partir de tissu parenchymateux pour structurer de l'huile, ledit matériau de paroi de cellule non-défibrillé anhydre particulaire ayant une masse volumique apparente inférieure à 50 g/l et au moins 90 % en masse dudit matériau de paroi de cellule non-défibrillé anhydre particulaire ayant une taille de particule de 25 $\mu$m à 500 $\mu$m.

**Figure 1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0533147 A
- WO 0218486 A
- US 20110281014 A
- US 20110281015 A
- US 20160030907 A
- WO 2015128155 A

**Non-patent literature cited in the description**

- **G. DONGOWSKI et al.** Binding of water, oil and bile acids to dietary fibres of the cellan type. *Biotechnology Progress,* April 1999, vol. 15 (2), 250-258
- **SOUZA et al.** A robust and universal NMR method for the compositional analysis of polysaccharides. *Carbohyd. Polym.,* 2013, vol. 95, 657-663
- Quantitative NMR assessment of polysaccharides in complex food matrices. **VAN VELZEN et al.** Magnetic resonance in Food science - Defining food by magnetic resonance. Royal Society of Chemistry, 2014, 39-48
- **H.A. BARNES ; J.F. HUTTON ; K. WALTERS.** An introduction to Rheology. Elsevier, 1989
- Scientific Image Analysis Library from the Quantitative Imaging Group. Delft University of Technology, 1995
- *J Agric Food Chem.,* 2006, vol. 54, 8471-9